# EUROPEAN PATENT SPECIFICATION

(11) **EP 0 978 246 B1**
(45) Date of publication and mention of the grant of the patent: **17.10.2001**
(21) Application number: 99830486.9
(22) Date of filing: 28.07.1999
(51) Int. Cl.: A47J 47/02

(54) **Food container with date indication of food entry**
Behälter für Nahrungsmittel mit Angabe des Nahrungsmittel-Eingabedatums
Conteneur pour de la nourriture avec une indication de la date d'entrée des aliments

(30) Priority: 07.08.1998 IT AN980050 U
(43) Date of publication of application: 09.02.2000
(73) Proprietor: Tontarelli, Sergio, I-60022 Castelfidardo (AN) (IT)
(72) Inventor: Tontarelli, Sergio, I-60022 Castelfidardo (AN) (IT)
(74) Representative: Baldi, Claudio

(56) References cited:
- EP-A- 0 426 963
- US-A- 2 201 524
- US-A- 3 818 858
- US-A- 4 621 670
- US-A- 4 662 520

## Description

The present patent application relates to a plastic container with lid, of the type preferably used to store food in refrigerators or freezers, provided with a special device to indicate the date on which the food was placed in the container.

The date on which the food was placed in the container corresponds to the date on which the container was stored in the refrigerator or freezer, since the two operations normally occur in sequence.

As a matter of fact, the container according to the present invention was designed as an answer to a common requirement of those who store food in the refrigerator (especially in the freezer) for long periods of time.

In this case it is very important to remember the date on which a specific food was placed in the container and stored in the refrigerator or freezer.

So far, the only solution available is represented by the application of date labels outside or inside the container, or by the registration of the date on which each single container was stored in the refrigerator or freezer in a special diary, provided that each container can be easily identified with respect to all the other containers contained in the refrigerator or freezer.

No special devices have been so far designed to comply with this specific requirement. The container according to the present invention as described in independent claims 1 and 2 has been designed to this purpose, since it includes an instrument to set the date on which the container was stored in the refrigerator or freezer. Further preferred features are disclosed in claim 3.

To this end, it is important to note that the indicator according to the present invention is located outside the container in an extremely visible position to allow for an immediate check of the date, without the need of keeping the door of the refrigerated compartment open for a long time or opening the container.

The US 4,621,670 patent describes a food container composed of a circular base, closed with a circular cover provided with a pointer along its perimeter, with a calendar on the external surface of a flange running all around the base opening.

In order to position the pointer on the desired date of the calendar, the user must rotate the cover until the pointer is located over the desired date.

However, the higher the closing pressure (that depends on the airtight seal of the closing) is, the stronger the cover rotation will have to be.

The purpose of the present invention is to provide for a food container with date indication of food entry in which the date setting does not depend on the position of the cover with respect to the container.

An additional purpose of the invention is to provide for a food container with date indication of food entry in which the correction of the food entry date does not require the removal or rotation of the cover.

Another additional purpose of the invention is to provide for a food container with date indication of food entry with any shape - such as circular, square, elliptical, hexagonal, etc. - since the presence of the device used to indicate the food entry date does not impose any constraint on the shape of the container.

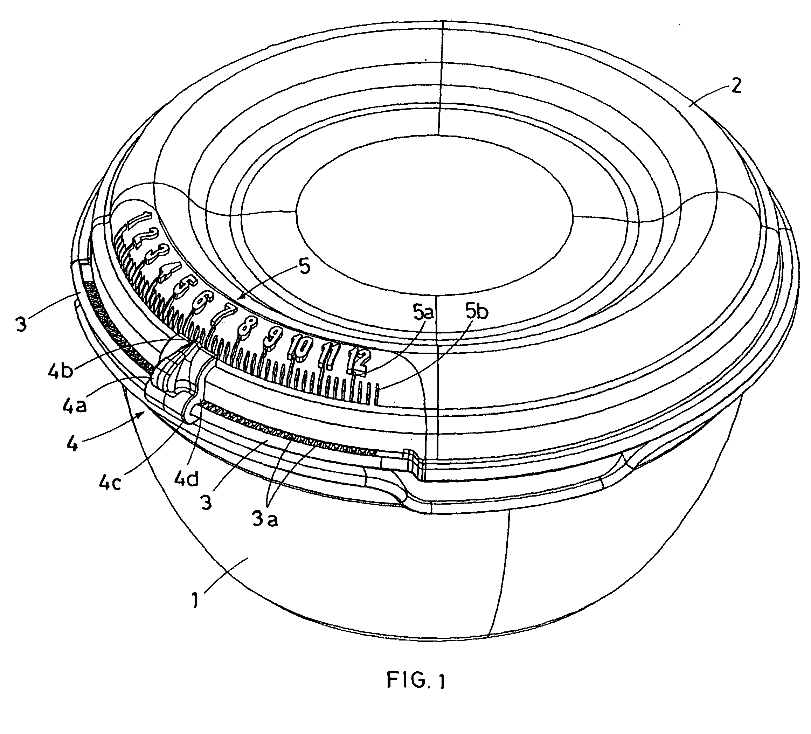

For major clarity the description of the container according to the present invention continues with reference to the enclosed drawing, which is intended for purposes of illustration and not in a limiting sense, whereby figure 1 is an axonometric view of a model of container according to the present invention.

With reference to the enclosed figure, the new plastic food container (1) is provided with a airproof lid (2) whose lower edge (3) is matched to a special cursor (4) incorporating a small handle (4a) for the user's fingers provided with a point (4b) on top.

The point (4b) cooperates with a weekly calendar (5) in relief on the lid (2), above the edge (3).

In particular, the calendar (5) is made up of twelve vertical lines (5a) - one for each month of the year - provided with the month number on the top; it being provided that three shorter vertical lines (5b) are located between each pair of the month lines (5a) to indicate the weeks of each month.

As it can be seen in the enclosed figure, three week lines (5b) are provided after the December line.

In order to set the date on which the container was stored in the refrigerator or freezer, the user only needs to slide the cursor (4) so that the point (4b) is perfectly aligned with the week line (5b) of the calendar that refers to the day on which the container was stored in the refrigerated compartment.

At this regard it must be noted that the lower section of the cursor (4) is shaped like a clamp (4c) capable of embracing the edge (3) of the lid (2) with a little pressure and guiding the alternate longitudinal travels of the cursor (4) along the edge (3) that corresponds to the calendar (5).

It is also important to note that the cursor (4) cannot slide freely and spontaneously along the edge (3). On the contrary, the cursor can move in both directions only if dragged with certain pressure by the user and, most of all, can firmly maintain the position set by the user on the edge (3).

This has been done to prevent the undesirable accidental movement of the cursor (4) with respect to the position set by the user.

Should this occur, it is obvious that doubts would arise on the correctness of the indicated date.

In order to ensure the controlled sliding of the cursor (4), a parallel series of transversal teeth (3a) is located on the upper side of the edge (3) of the lid (2). When the cursor slides, the series of transversal teeth (3a) engages with the clamp (4c) of the cursor (4) which is provided with two curved elements facing downwards (4d) on the sides.

The intrinsic elastic distortion of the plastic material of the cursor (4) enables the clamp (4c) to slightly divert when the two curved elements (4d) interfere with the two corresponding teeth (3a) of the longitudinal edge (3). In this way, the clamp (4c) is capable of overcoming the obstacle created by the teeth (3a) during its sliding.

It is evident that the clamp can slide only if the user drags the cursor (4) along the longitudinal edge (3) with certain pressure.

The elastic distortion of the clamp (4c) of the cursor (4) allows the clamp (4) to resume its normal position, as soon the interference between the teeth (3a) of the edge (3) and the curved elements facing downwards (4d) ends.

At this purpose it must be noted that in this case each curved element (4d) of the cursor (4) is exactly located between a pair of teeth (3a) of the edge (3), without the possibility of sliding.

This means the entire cursor (4) remains blocked in the position set by the user until the user decides to move it again, as illustrated above.

Moreover, it must be said that, while remaining within the manufacturing and operating characteristics indicated above, the cursor and the weekly calendar can be positioned on the container body - and not on the lid - as illustrated before.

In this case, the weekly calendar must be located on the side of the container, just below the opening edge and provided with the cursor with the point facing downwards. The container edge along which the cursor slides must be provided with the usual series of teeth that cooperate with the curved elements of the cursor.

It must be noted that no specific drawing has been provided for this version of the present invention, since it features no conceptual and constructive difference with respect to the model illustrated in figure 1, apart from the different location of the calendar.

## Claims

1. Plastic moulded food container of the type comprising a container (1), an airtight seal lid (2) with edge (3) and a weekly calendar (5) cooperating with a cursor, **characterised by** the fact that the cursor (4) has a point (4b) facing upwards, is capable of sliding, and is permanently fixed, along a section of the edge (3) of the lid (2), and by the fact that the point (4b) co-operates with the weekly calendar (5) located on the body of the lid (2) in parallel position near the section of the edge (3) on which the cursor (4) slides; the calendar (5) being made up of twelve vertical lines (5a), each one preferably provided with the month number, and of twelve sets of three shorter vertical lines (5b) in alternate position with respect to the higher lines (5a).

2. Plastic moulded food container of the type comprising a container (1), an airtight seal lid (2) with edge (3) and a weekly calendar (5) cooperating with a cursor, **characterised by** the fact that the cursor (4) has a point (4b) facing downwards, is capable of sliding, and is permanently fixed, along a section of the opening edge of the container (1) and by the fact that the calendar (5) is located on the body of the container (1) in parallel position near the section of the opening edge of the container (1) on which the cursor (4) slides; the calendar (5) being made up of twelve vertical lines (5a), each one preferably provided with the month number, and of twelve sets of three shorter vertical lines (5b) in alternate position with respect to the higher lines (5a).

3. Food container according to the previous claims **characterised by** the fact that the lower section of the cursor (4) is shaped like a clump (4c) which can be elastically deformed and is capable of embracing the section of the edge of the lid (2) or the container (1) on which the cursor (4) slides under a little pressure; it being provided that the end (4c) of the cursor (4) is laterally provided with two curved elements (4d) capable of interfering with a series of transversal teeth located on the edge of the lid (2) or the container (1) in order to obtain the forced sliding of the cursor (4).

## Patentansprüche

1. Aus Kunststoff gegossener Lebensmittelbehälter, der einen Behälter (1) mit hermetisch schließendem Deckel (2) mit umlaufendem Rand (3) und einen Wochenkalender (5) umfasst, der mit einem Schieber zusammenwirkt, **dadurch gekennzeichnet, dass** der Schieber (4) eine nach oben gerichtete Spitze (4b) hat, die in der Lage ist, entlang eines Abschnitts des umlaufenden Randes (3) des Deckels (2) zu gleiten und in einer stabilen Arretierstellung zu verbleiben, außerdem **dadurch gekennzeichnet, dass** besagte Spitze (4b) mit dem genannten Wochenkalender (5) zusammenwirkt, der auf dem Körper des Deckels (2) unmittelbar parallel zum Abschnitt des zuvor genannten umlaufenden Randes (3) ausgearbeitet ist, an welchem der besagte Schieber (4) entlanggleitet, wobei der Kalender (5) aus zwölf vertikalen Rippen (5a), jeweils vorzugsweise mit einer Nummer der zwölf Monate versehen, sowie aus zwölf niedrigeren, vertikalen Dreifach-Rippenbündeln (5b) besteht, die abwechslungsweise zu den höheren Rippen (5a) angeordnet sind.

2. Aus Kunststoff gegossener Lebensmittelbehälter, der einen Behälter (1) mit hermetisch schließendem Deckel (2) mit umlaufendem Rand (3) und einen Wochenkalender (5) umfasst, der mit einem Schieber zusammenwirkt, **dadurch gekennzeichnet, dass** der Schieber (4) eine nach unten gerichtete Spitze (4b) hat, die in der Lage ist, entlang eines Abschnitts des umlaufenden Randes der Tülle des Behälter (1) zu gleiten und in einer stabilen Arretierstellung zu verbleiben, außerdem **dadurch gekennzeichnet, dass** Kalender auf dem Körper des Behälters (1) unmittelbar parallel zum Abschnitt des zuvor genannten umlaufenden Randes der Tülle des Behälter (1) ausgearbeitet ist, an welchem der besagte Schieber (4) entlanggleitet, wobei der Kalender (5) aus zwölf vertikalen Rippen (5a), jeweils vorzugsweise mit einer Nummer der zwölf Monate versehen, sowie aus zwölf niedrigeren, vertikalen Dreifach-Rippenbündeln (5b) besteht, die abwechslungsweise zu den höheren Rippen (5a) angeordnet sind.

3. Lebensmittelbehälter gemäß den vorstehenden Ansprüchen, **dadurch gekennzeichnet, dass** der Schieber (4) mit einer zangenartigen, elastisch verformbaren Profilspitze (4c) versehen ist, die bei Ausübung eines leichten Drucks in der Lage ist, den umlaufenden Rand des Deckels (2) oder des Behälters (1) zu umgreifen, an welchem der Schieber (4) entlanggleitet, wobei vorgesehen ist, das diese Spitze (4c) des Schiebers (4) seitlich zwei Nasen (4d) aufweist, die in seine Reihe von transversalen Zähnen eingreifen, die auf dem umlaufenden Rand des Deckels (2) oder des Behälters (1) ausgearbeitet sind, um eine Zwangsgleitung des Schiebers (4) zu erzielen.

## Revendications

1. Récipient pour aliments, moulé en plastique, du type comprenant un récipient (1), un couvercle étanche (2) avec un bord de périmètre (3) et un calendrier hebdomadaire (5) qui coopère avec un curseur, **caractérisé en ce que** le curseur (4) est doté d'une pointe (4b) tournée vers le haut qui est en mesure de glisser et de rester de manière stable en position d'arrêt, le long d'un segment du bord de périmètre (3) du couvercle (2) et **en ce que** ladite pointe (4b) coopère avec ledit calendrier hebdomadaire (5) réalisé sur le corps du couvercle (2), en position parallèle et rapprochée du segment du susdit bord de périmètre (3), le long duquel se déplace le susdit curseur (4) ; le calendrier (5) étant formé de douze nervures verticales (5a), chacune préférablement dotée de l'indication du numéro du mois relatif et de douze trios de nervures verticales plus courtes (5b), alternées aux susdites nervures plus longues (5a).

2. Récipient pour aliments, moulé en plastique, du type comprenant un récipient (1), un couvercle étanche (2) avec un bord de périmètre (3) et un calendrier hebdomadaire (5) qui coopère avec un curseur, **caractérisé en ce que** le curseur (4) est doté d'une pointe (4b) tournée vers le bas qui est en mesure de glisser et de rester de manière stable en position d'arrêt, le long d'un segment du bord de périmètre d'embouchure du récipient (1) même et **en ce que** le calendrier résulte réalisé sur le corps du récipient (1), en position parallèle et rapprochée du segment du bord de périmètre d'embouchure du récipient (1) le long duquel le susdit curseur (4) se déplace; le calendrier (5) étant formé de douze nervures verticales (5a), chacune préférablement dotée de l'indication du numéro du mois relatif et de douze trios de nervures verticales plus courtes (5b), alternées aux susdites nervures plus longues (5a).

3. Récipient pour aliments selon les revendications précédentes, **caractérisé en ce que** le curseur (4) est doté d'une extrémité façonnée en forme de pince (4c), qui se déforme de manière élastique, et en mesure d'enserrer, en la forçant légèrement, le segment du bord de périmètre du couvercle (2) ou du récipient (1), le long duquel le curseur (4) est destiné à se déplacer ; étant prévu que cette extrémité (4c) du curseur (4) présente latéralement deux fentes (4d) aptes à interférer avec une série de petites dents transversales réalisées sur le segment du bord de périmètre du couvercle (2) ou du récipient (1) en objet, dans le but d'obtenir le glissement forcé du curseur (4) même.
